# EUROPEAN PATENT SPECIFICATION

(11) **EP 1 863 305 B1**
(45) Date of publication and mention of the grant of the patent: **08.05.2013**
(21) Application number: 06114647.8
(22) Date of filing: 29.05.2006
(51) Int. Cl.: H04W 88/08

(54) **System and method for management of mobile device communication**
System und Verfahren zur Verwaltung von Mobilfunkendgerätskommunikation
Système et procédé pour la gestion de communication d'unité mobile

(43) Date of publication of application: 05.12.2007
(73) Proprietor: Research In Motion Limited, Waterloo, ON N2L 3W8 (CA)
(72) Inventor: Owen, Russell, Waterloo Ontario N2K 4B8 (CA)
(74) Representative: Moore, Barry

(56) References cited:
- EP-A- 1 054 571
- EP-A- 1 309 211
- EP-A- 1 534 026
- US-A- 6 032 051
- US-A1- 2005 079 873
- US-A1- 2005 153 741
- US-A1- 2005 165 914

## Description

The present invention relates generally to communication systems and more specifically to a system and method for the management of communication with mobile devices in such systems.

Wireless mobile communication devices are in increasing use and the ability to ensure continued connectivity for users is of increasing importance. To aid in management of mobile device communication, it is desirable for users of such devices within an enterprise to have identification and communication information stored in a manner that permits the information to be accessible and current.

One example of such identification and communication information may relate to telephone numbers assigned to mobile communication devices. Wireless devices such as mobile telephones typically make use of a SIM (Subscriber Identity Module) component to identify the device to the wireless network that the device uses for communication. A user may change the SIM in a mobile communication device to allow the user to use a network in a different geographic region. This change in SIM is one way to permit device "roaming". If a wireless user moves to an area where a first communication carrier's wireless network does not reach, or where the cost for access to that carrier's network becomes unacceptable, the wireless user may replace a first SIM with a SIM for another wireless network.

In wireless communication devices that include both e-mail and telephone functionality, a change of SIM will not necessarily change the e-mail address for the device, but it will result in a change in the telephone number that is assigned to the device. As a result, attempts to communicate with the mobile device with a new SIM by telephone may fail. Information available to other employees of an enterprise of to non-employees may be out of date or temporarily inaccurate. US2005/079873 discloses a system for reporting a user's presence status in a telecommunications system. In this system, remote devices are configured to receive location information from the global positioning system and transmit location/presence update information to users or servers on the network using communication controllers on the remote device. The remote device may be configured to provide updated information about its location/presence, or status changes, to a remote server on periodic basis. US2005/079873 also teaches that status updates may be provided to other devices in the form of e-mail or text messages.

US2005/153741 discloses a system for handling changes to subscriber or device-related information, such as that stored in removable memory such as a SIM or smart card. Each mobile device has profile information that may include the manufacturer, model, firmware version, list of registered services, as well as IMEI information and other identifiers such as an ESN and MSISDN, etc. A database in a network for registration of the mobile device maintains records for each mobile device, including IMEI and MSISDN and profile information. US2005/153741 also discloses that IMEI and profile information may be updated in the network database.

As will be appreciated, there is often other status information about a mobile communication device that is useful in management of communication to the device. Status information concerning the location of the device may be usable for communication management, for example, if such information indicates that the device is in a particular time zone or if it indicates that the device is in a cradle at a workstation. Other dynamic network identifier information may also be useful status information for the device, for example, an IP address assigned to a handset.

It is therefore desirable to provide a system and method for the management communications relating to mobile devices which is based on status information being made available by the devices.

### Brief Description of the Drawings

In drawings which illustrate by way of example only a preferred embodiment of the invention,

Figure 1 is an overview of an example communication system in which a wireless communication device may be used.

Figure 2 is a block diagram of a further example communication system including multiple networks and multiple mobile communication devices.

Figure 3 is a block diagram showing a high-level representation of an example arrangement of a mobile communication device and enterprise system components according to the preferred embodiment.

### Description of Preferred Embodiments

Accordingly the present teaching provides a subsystem for a mobile communication device in accordance with claim 1. Advantageous features are defined in the dependent claims.

Accordingly the present teaching provides a mobile communication device in accordance with claim 5.

Accordingly the present teaching provides a system in accordance with claim 6.

Accordingly the present teaching provides a method for providing status information in accordance with claim 10. Advantageous features are defined in the dependent claims.

Accordingly the present teaching provides a computer-readable medium in accordance with claim 15.

Advantages of the preferred embodiment include the ability to automatically propagate status information relating to a mobile communication device to an enterprise-based server to allow decisions to be made in communication management, such as routing decisions. Advantages of the preferred embodiment include the ability to update telephone numbers (or other dynamic network identifiers) in an enterprise directory or database when a change has occurred for a mobile communication device (such as the use of a different SIM card on a mobile device). Advantages also include the ability to update a PBX (Private Branch Exchange) to allow a change in telephone number to be tracked when a forwarding feature is in use in the PBX

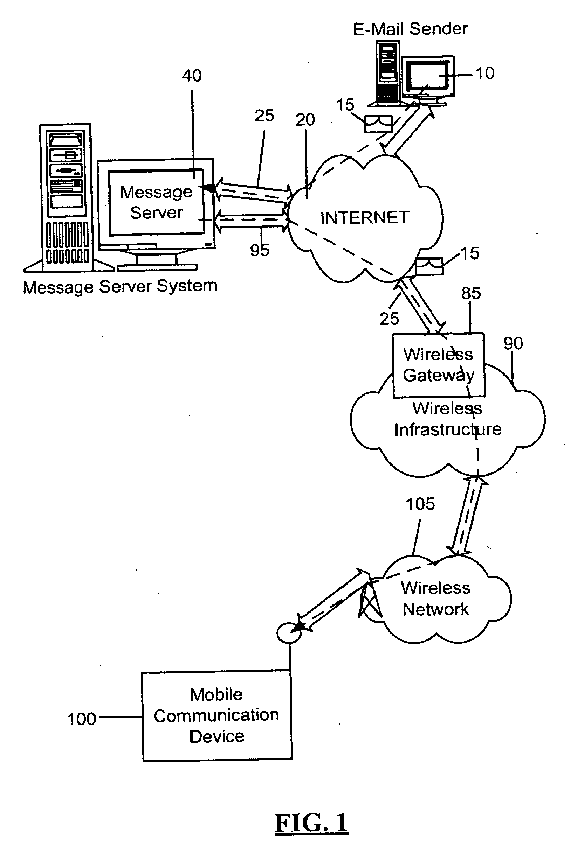

Figure 1 is an overview of an example communication system in which a mobile communication device may be used. One skilled in the art will appreciate that there may be other different topologies, but the system shown in Figure 1 helps demonstrate the operation of the secure message processing systems and methods described in the present application. There may also be many message senders and recipients. The simple system shown in Figure 1 is provided for illustrative purposes.

Figure 1 shows an e-mail sender 10, the Internet 20, a message server system 40, a wireless gateway 85, wireless infrastructure 90, a wireless network 105 and a mobile communication device 100.

An e-mail sender system 10 may, for example, be connected to an ISP (Internet Service Provider) on which a user of the system 10 has an account, located within a company, possibly connected to a local area network (LAN), and connected to the Internet 20, or connected to the Internet 20 through a large ASP (application service provider) such as America Online (AOL). Those skilled in the art will appreciate that the systems shown in Figure 1 may instead be connected to a wide area network (WAN) other than the Internet, although e-mail transfers are commonly accomplished through Internet-connected arrangements as shown in Figure 1.

The message server 40 may be implemented, for example, on a network computer within the firewall of a corporation, a computer within an ISP or ASP system or the like, and acts as the main interface for e-mail exchange over the Internet 20. Although other messaging systems might not require a message server system 40, a mobile communication device 100 configured for receiving and possibly sending e-mail will normally be associated with an account on a message server. Perhaps the two most common message servers are Microsoft Exchange™ and Lotus Domino™. Such products are often used in conjunction with Internet mail routers that route and deliver mail. These intermediate components are not shown in Figure 1, as they do not directly play a role in the message processing described below. Message servers such as server 40 typically extend beyond just e-mail sending and receiving; they also include dynamic database storage engines that have predefined database formats for data like calendars, to-do lists, task lists, e-mail and documentation.

The wireless gateway 85 and infrastructure 90 provide a link between the Internet 20 and wireless network 105. The wireless infrastructure 90 determines the most likely network for locating a given user and tracks the user as they roam between countries or networks. A message is then delivered to the mobile communication device 100 via wireless transmission, typically at a radio frequency (RF), from a base station in the wireless network 105 to the mobile communication device 100. The particular network 105 may be virtually any wireless network over which messages may be exchanged with a mobile communication device.

As shown in Figure 1, a composed e-mail message 15 is sent by the e-mail sender 10, located somewhere on the Internet 20. This message 15 is normally fully in the clear and uses traditional Simple Mail Transfer Protocol (SMTP), RFC822 headers and Multipurpose Internet Mail Extension (MIME) body parts to define the format of the mail message. These techniques are known to those skilled in the art. The message 15 arrives at the message server 40 and is normally stored in a message store. In a preferred embodiment described in further detail below, messages addressed to a message server account associated with a host system such as a home computer or office computer which belongs to the user of a mobile communication device 100 are redirected from the message server 40 to the mobile communication device 100 as they are received.

Regardless of the specific mechanism controlling the forwarding of messages to the mobile communication device 100, the message 15, or possibly a translated or reformatted version thereof, is sent to the wireless gateway 85. The wireless infrastructure 90 includes a series of connections to wireless network 105. These connections could be Integrated Services Digital Network (ISDN), Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple Access (CDMA) networks, (2) the Groupe Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric network include the Mobitex™ Radio Network and the DataTAC™ Radio Network. Examples of older voice-centric data networks include Personal Communication Systems (PCS) networks like GSM, and TDMA systems.

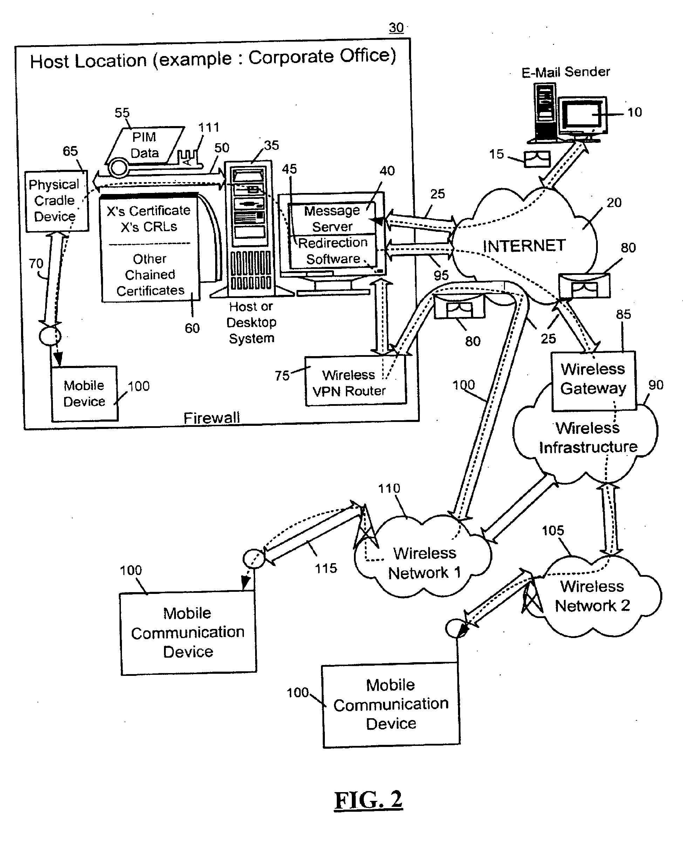

Figure 2 is a block diagram of a further example communication system including multiple networks and multiple mobile communication devices. The system of Figure 2 is substantially similar to the Figure 1 system, but includes a host system 30, a redirection program 45, a mobile device cradle 65, a wireless virtual private network (VPN) router 75, an additional wireless network 110 and multiple mobile communication devices 100. As described above in conjunction with Figure 1, Figure 2 represents an overview of a sample network topology. Although the message processing systems and methods described herein may be applied to networks having many different topologies, the network of Figure 2 is useful in understanding an automatic e-mail redirection system mentioned briefly above.

The central host system 30 will typically be a corporate office or other LAN, but may instead be a home office computer or some other private system where mail messages are being exchanged. Within the host system 30 is the message server 40, running on a computer within the firewall of the host system that acts as the main interface for the host system to exchange e-mail with the Internet 20. In the system of Figure 2, the redirection program 45 enables redirection of data items from the server 40 to a mobile communication device 100. Although the redirection program 45 is shown to reside on the same machine as the message server 40 for ease of presentation, there is no requirement that it must reside on the message server. The redirection program 45 and the message server 40 are designed to co-operate and interact to allow the pushing of information to mobile devices 100. In this installation, the redirection program 45 takes confidential and non-confidential corporate information for a specific user and redirects it out through the corporate firewall to mobile devices 100. A more detailed description of the redirection software 45 may be found in the commonly assigned United States Patent 6,219,694 ("the '694 Patent"), entitled "System and Method for Pushing Information From A Host System To A Mobile Data Communication Device Having A Shared Electronic Address", and issued to the assignee of the instant application on April 17, 2001. This push technique may use a wireless friendly encoding, compression and encryption technique to deliver all information to a mobile device, thus effectively extending the security firewall to include each mobile communication device 100 associated with the host system 30.

As shown in Figure 2, there may be many alternative paths for getting information to the mobile communication device 100. One method for loading information onto the mobile communication device 100 is through a port designated 50, using a device cradle 65. This method tends to be useful for bulk information updates often performed at initialization of a mobile communication device 100 with the host system 30 or a computer 35 within the system 30. The other main method for data exchange is over-the-air using wireless networks to deliver the information. As shown in Figure 2, this may be accomplished through a wireless VPN router 75 or through a traditional Internet connection 95 to a wireless gateway 85 and a wireless infrastructure 90, as described above. A VPN connection could be established directly through a specific wireless network 110 to a mobile communication device 100. The possibility of using a wireless VPN router 75 is contemplated to be used with Internet Protocol (IP) Version 6 (IPV6) on IP-based wireless networks. This protocol will provide enough IP addresses to dedicate an IP address to every mobile communication device 100 and thus make it possible to push information to a mobile communication device 100 at any time. A principal advantage of using this wireless VPN router 75 is that it could be an off-the-shelf VPN component, thus it would not require a separate wireless gateway 85 and wireless infrastructure 90 to be used. A VPN connection would preferably be a Transmission Control Protocol (TCP)/IP or User Datagram Protocol (UDP)/IP connection to deliver the messages directly to the mobile communication device 100. If a wireless VPN 75 is not available then a link 95 to the Internet 20 is the most common connection mechanism available and has been described above.

In the automatic redirection system of Figure 2, a composed e-mail message 15 leaving the e-mail sender 10 arrives at the message server 40 and is redirected by the redirection program 45 to the mobile communication device 100. As this redirection takes place the message 15 is re-enveloped, as indicated at 80, and a possibly proprietary compression and encryption algorithm can then be applied to the original message 15. In this way, messages being read on the mobile communication device 100 are no less secure than if they were read on a desktop workstation such as 35 within the firewall. All messages exchanged between the redirection program 45 and the mobile communication device 100 preferably use this message repackaging technique. Another goal of this outer envelope is to maintain the addressing information of the original message except the sender's and the receiver's address. This allows reply messages to reach the appropriate destination, and also allows the "from" field to reflect the mobile user's desktop address. Using the user's e-mail address from the mobile communication device 100 allows the received message to appear as though the message originated from the user's desktop system 35 rather than the mobile communication device 100.

With reference back to the port 50 and cradle 65 connectivity to the mobile communication device 100, this connection path offers many advantages for enabling one-time data exchange of large items. For those skilled in the art of personal digital assistants (PDAs) and synchronization, the most common data exchanged over this link is Personal Information Management (PIM) data 55. When exchanged for the first time this data tends to be large in quantity, bulky in nature and requires a large bandwidth to get loaded onto the mobile communication device 100 where it can be used on the road. This serial link may also be used for other purposes, including setting up a private security key 111 such as an S/MIME or PGP (Pretty Good Privacy data encryption) specific private key, the Certificate (Cert) of the user and their Certificate Revocation Lists (CRLs) 60. The private key is preferably exchanged so that the desktop 35 and mobile communication device 100 share one personality and one method for accessing all mail. The Cert and CRLs are normally exchanged over such a link because they represent a large amount of the data that is required by the device for S/MIME, PGP and other public key security methods.

As will be appreciated from the above description, mobile communication device 100 is usable to communicate using wireless data networks to permit e-mail and related data to be exchanged (as is shown for e-mailer sender 10 in Figures 1 and 2). Further, mobile communication device 100 is usable for voice communication using wireless data networks which permit the device to be operated as a telephone with an assigned telephone number. Although Figures 1 and 2 primarily show data communication paths between devices, mobile devices 100 may communicate with each other, and with other devices, using wireless networks for voice communication. This communication takes place over conventionally-defined wireless voice networks as are supported by mobile communication device 100.

As will be appreciated, and as is described in further detail below, the identifying characteristics of mobile communication device 100, such as an assigned telephone number or other dynamic network identifiers (such as an IP address), may change over time. In the preferred embodiment, an initialization or change to such an identifying characteristic is handled at a host location so as to permit dissemination of the identifying characteristic to particular users of the communication network.

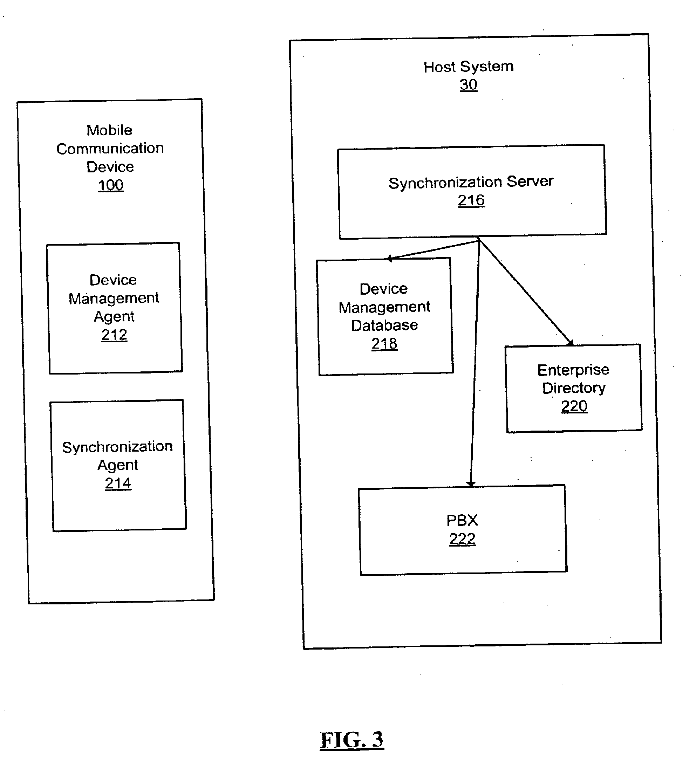

This aspect of the preferred embodiment is described with reference to the example shown in the block diagram of Figure 3. The figure shows a selected subsystem of mobile communication device 100. In current wireless remote communication systems there are different types of devices, such as a personal digital assistant, a smart phone or a wireless handheld device, each of which may potentially be employed as mobile communication device 100 as shown in this description of the preferred embodiment. Different networks may also be employed to allow the device to communicate. In the preferred embodiment the mobile communication device 100 is used by a person who is considered to be part of a defined organization or enterprise, as described further below.

Mobile communication device 100 in Figure 3 is shown as comprising a subsystem having device management agent 212 and synchronization agent 214. The functions of these agents are set out in more detail below. In the preferred embodiment these agents are implemented as program code that is executable by mobile communication device 100 and is operative to carry out defined functions on mobile communication device 100. The preferred embodiment may be implemented as a computing device program product, or as a portion of such a product, that includes program code operative in whole or in part on mobile communication device 100 and/or on computing devices at a host system 30 to carry out steps in the process described below. Such a computing-device program product may be embodied in, and delivered to an intended computing device by, signals carried by networks, including the Internet, or may be embodied in media such as magnetic, electronic or optical storage media. The process described may be carried out by a combination of one or more of executable code, firmware and hardware in a computing device.

It will be appreciated by those skilled in the art that the functions of agents 212 and 214 may be implemented by way of one or more of program code, hardware or firmware. In the preferred embodiment these functional components are referred to as agents but other computing device elements operative to carry out the functionality of agents 212, 214 and the components in host system 30 may be provided, as is appreciated by those skilled in the art. In the description, synchronization agent 214 is described as forwarding information to host system 30. As will be appreciated, the various communications systems referred to in Figures 1 and 2 are potentially available to mobile communication device 100 and the forwarding of information by synchronization agent 214, and the receipt of such information by host system 30, is carried out using such communications systems as referred to above.

Figure 3 shows enterprise components that are, in the preferred embodiment, implemented at a host system 30. In the preferred embodiment, host system 30 is located at a single location in an enterprise. It is understood by those skilled in the art that the components in host system 30 shown in Figure 3 may be outsourced or otherwise provided at a location remote from host system 30. The functionality described below for the components shown in host system 30 in Figure 3 are provided so as to be available to the enterprise, as is described in more detail below.

Figure 3 shows synchronization server 216, device management database 218, enterprise directory 220, and PBX 222 in host system 30. Host system 30 is, in the preferred embodiment, associated with a particular enterprise. It is understood that the enterprise will have available to it system resources that will carry out some or all of the functions as described below with reference to synchronization server 216, device management database 218, enterprise directory 220 and PBX 222. For example, the preferred embodiment is described with reference to the separate component device management database 218. However, an alternative embodiment may provide for handling of device management data as an integral aspect of synchronization server 216 and not as a separate component as is suggested in Figure 3 with reference to the preferred embodiment.

In operation, mobile communication device 100 contains a processor able to run executable code implementing device management agent 212. Device management agent 212 is operative to interrogate the mobile communication device itself and obtain device status information. Examples of such information include memory usage, memory availability and application status. In the preferred embodiment, such information includes mobile device status information usable for managing communication to the device, such as the telephone number assigned to mobile communication device 100. Other status information such as "off-hook" or "in-cradle" may also be obtained by device management agent 212 interrogating the device. In the preferred embodiment, such state information is able to be stored by device management agent 212 in memory on the device. As will be appreciated, mobile communication device 100 may also include other executable code operative to obtain and/or store status information in memory on the device independently of device management agent 212. The preferred embodiment is designed, however, to use device management agent 212 to collect and store potentially usable device status information.

As shown in the Figure 3 representation of the preferred embodiment, mobile communication device 100 also includes synchronization agent 214. Synchronization agent 214 is computing device executable code operative to manage device status information collected and stored by device management agent 212 so as to synchronize this information with records maintained by an enterprise associated with the mobile communication device 100. Such an enterprise is typically a business, government or academic organization but may include any defined set of users having a common set of characteristics and who are identifiable to each other. For example, defined user groups or on-line communities may be considered enterprises in the sense used in this description. As is described with reference to the preferred embodiment, the enterprise includes accessible data for storing communication information relating to one or more mobile communication devices 100. As is described in more detail below, such information is dynamic and the enterprise includes processes for updating such information in data memory accessible by host system 30.

According to the preferred embodiment, when a change in device status for mobile communication device 100 is detected (as described below), synchronization agent 214 initiates a synchronization operation to provide for the updating of data maintained by the enterprise in host system 30. In the preferred embodiment, synchronization agent 214 uses the wireless communication capability of mobile communication device 100 to communicate device status information to synchronization server 216.

An example of the operation of agents 212 and 214 on mobile communication device 100 is given when a SIM for the device is exchanged for a different SIM. Such a change will be desirable when, for example, mobile communication device 100 is moved from a region having a first wireless network to a region with a different wireless network. In some cases, a first SIM will function in the first region but not in the second, requiring a second SIM to be installed in mobile communication device 100. As will be appreciated by those skilled in the art, the first and second SIMs will be assigned different telephone numbers.

According to the preferred embodiment, device management agent 212 is operative to periodically interrogate the SIM installed in mobile communication device 100. When device management agent 212 interrogates a newly installed SIM it is operative to determine that there is a new telephone number for the device (by comparing the number for the new SIM with a previously-stored record of the telephone number associated with mobile communication device 100). According to the preferred embodiment, device management agent 212 stores this new telephone number (obtained by interrogating the new SIM) in the device status data stored on device 100. In the preferred embodiment, device management agent 212 will then trigger execution by synchronization agent 214 and will provide synchronization agent 214 with the relevant details of the change in status information for device 100 (the new telephone number in the case of this example). Consequently, synchronization agent 214 communicates the new telephone number for device 100 to synchronization server 216 in host system 30, along with other information usable to permit proper updating of enterprise records, if any.

Alternatively, upon detecting a new SIM on interrogating the device, device management agent 212 may merely update the data on device 100 that reflects device status information, without directly initiating operation of synchronization agent 214. In such an arrangement, operation of synchronization agent 214 will either be triggered by another defined event (for example, replacing mobile communication device 100 in a holster or in a cradle) or may be initiated by a timeout or some other periodic event selectable by an administrator or user of mobile communication device 100.

As will be appreciated, other status information for mobile communication device 100 may be tracked, stored and forwarded to host system 30 in a manner analogous to that described for telephone number status information in the example. Such status information for mobile communication device 100 may include the physical location of the device as may be obtained by a global positioning service or information as to whether mobile communication device 100 is in physical cradle device 65, or not. Other dynamic network identifiers (such as a personal identification number assigned by a network administrator, or such as an IP address) may also be treated in a similar fashion.

Turning to enterprise components that may be located in host system 30, the preferred embodiment configuration includes device management database 218. This database includes records reflecting the devices usable by those associated with the enterprise (for example, by employees of, or contractors retained by, a corporation). When synchronization server 216 receives device status information from mobile communication device 100 (due to operation of synchronization agent 214), the information is stored in the appropriate record in device management database 218 relating to device 100. In the example above, when a SIM for (and hence the telephone number assigned to) mobile communication device 100 is changed and a new telephone number is sent to host system 30 by synchronization agent 214, synchronization server 16 is operative to enter the new telephone number in device management database 218 in the appropriate data record associated with the user of mobile communication device 100.

The block diagram of Figure 3 also shows that synchronization server 216 interoperates with both enterprise directory 220 and PBX 222. In an alternative embodiment, the information from mobile communication device 100 can be stored by synchronization server 216 only in device management database 218, and other applications are then able to access the information as stored in the database to permit the tailoring of communication with mobile communication device 100.

In the arrangement shown in Figure 3, synchronization server 216 may copy status information about mobile communication device 100 to enterprise directory 220. Thus a change in telephone number communicated by synchronization agent 214 will be recorded in enterprise directory 220. The result is that when a SIM is changed in mobile communication device 100, for example, the new telephone number for the device is recorded in a directory and calls to the device which rely on information in enterprise directory 220 will be successful.

Figure 3 also shows PBX 222 that is also able to receive information about mobile communication device 100 by operation of synchronization server 216. With respect to the change in telephone number referred to above, if the user of device 100 wishes to forward calls directed to his or her line in the PBX to the mobile device, the new telephone number may be automatically entered in PBX 222 by synchronization server 216. In the preferred embodiment, an administrator may use an interface provided for synchronization server 216 to specify communication preferences for the user of mobile communication device 100. Alternatively, some or all users of such mobile communication devices 100 may be provided with the ability to define such communication management preferences. Synchronization server 216 will accordingly be operative to receive status information and to update records and communication permissions at host system 30 in accordance with the defined communication management preferences so defined by an administrator or user.

As is suggested above, status information from mobile communication device 100 may relate to the physical location of the device (using a Global Positioning Service, for example), or whether the device is in a cradle or not. This information, when propagated to the enterprise by operation so synchronization agent 214 and synchronization server 216, may be used to route communications to the user of mobile communication device 100 in accordance with the defined preferences for the user. For example, if the mobile communication device is in cradle 65, this status information can be communicated by synchronization server 216 to the appropriate components in host system 30 (for example PBX 222) so as to route telephone calls to a telephone extension of the user in an exchange within the enterprise, rather than to the mobile device.

The preferred embodiment also provides for users associated with the enterprise to register one or more interests in other devices or users in the enterprise. As is referred to above with respect to the management of communications in accordance with specified user preferences, an administrator may register such interests or users may be provided with the ability to specify such an interest directly. In either case, according to the preferred embodiment, such an interest may be registered using synchronization server 216. According to the preferred embodiment, the interest is recorded in device management database 218.

Accordingly, when status information is received by synchronization server 216, the server will determine, using device management database 218, whether there is a registered interest in the mobile communication device relating to the received status information. When the records of device management database 218 indicate that there is such an interest, synchronization server 216 will forward the status information to a device relating to the registered interest. According to the preferred embodiment, users of mobile communication devices may use device management agent 212 to register such an interest. In addition, synchronization agent 214 and device management agent 212 are defined to receive and to process, respectively, status information regarding the device of interest received from synchronization server.

For example, a first user may register a first device as being interested in a second device. When there is a SIM change for the second device, synchronization server 216 forwards the new telephone number for the second device to the first device where the new telephone number can be added to, or used to update, an address book maintained on the first device. Synchronization agent 214 is operative to receive the new telephone number information and pass it to device management agent 212, which is operative to update an address book maintained in mobile communication device 100.

As will be appreciated, this type of interest registration may be used to provide other types of communication management. For example, using the process described above, a warning notice may be given to a user who attempts to initiate a telephone call to a mobile communication device when that device is in a time zone where it is no longer business hours. The user attempting to make the telephone call may register and interest in the time zone status information for the target device and synchronization server 216 may forward such information to the device for the calling user which information can be used by that device to display an appropriate warning to the calling user prior to the call being placed.

In this way, changes in the status information for a mobile communication device can be communicated to another device, on request. In the preferred embodiment synchronization server 216 provides an interface to permit a system administrator to define relationships between users and/or devices so that changes in device status information will be propagated from the enterprise to the other devices according to the defined relationships. For example, the current telephone numbers for all directly reporting staff may be updated on the address books of devices for the managers for those direct reports. The information flow and processing for device management agent 212 and synchronization server 216 may be defined based on the structure of the enterprise, with rules for propagation of status information being defined based on the assignment of mobile communication devices within the enterprise.

Other functionality and management capabilities may be defined for the enterprise using synchronization server 216 and the interaction with synchronization agent 214. Various embodiments of the present invention having been thus described in detail by way of example, it will be apparent to those skilled in the art that variations and modifications may be made without departing from the invention. The invention includes all such variations and modifications as fall within the scope of the appended claims.

A portion of the disclosure of this patent document contains material which is subject to copyright protection. The copyright owner has no objection to the facsimile reproduction by any one of the patent document or patent disclosure, as it appears in the Patent and TrademarkOffice patent file or records, but otherwise reserves all copyrightrights whatsoever.

## Claims

1. A subsystem for a mobile communication device (100), said mobile communication device being associated with an organization and capable of communicating with a host system (30) of the organization, the subsystem comprising a device management agent (212) and a synchronization agent (214) operative on the mobile communication device, **characterised in that**:
the device management agent (212) is operative to:
detect a change in status of the mobile communication device (100);
obtain information relating to the detected change in status;
provide the synchronization agent (214) with the information;
receive, from the synchronization agent, time zone status information relating to another mobile communication device of interest also associated with the organization; and
automatically update a data store in the mobile communication device (100) with the received time zone status information, and
the synchronization agent (214) is operative to:
communicate the information received from the device management agent (212) to the host system (30);
receive, from the host system, the time zone status information relating to the other mobile communication device; and
provide the received time zone status information to the device management agent (212),
wherein the mobile communication device (100) is configured to, upon initiation of a telephone call to the other mobile communication device, provide a warning based on said time zone status information.

2. The subsystem of claim 1 further **characterised in that** the device management agent and the synchronization agent are interoperative on the mobile communication device to obtain and communicate to the host system one or more interests in status information for other mobile communication devices associated with the organization.

3. The subsystem of claim 1, wherein the data store is an address book.

4. The subsystem of claim 1, wherein the information relating to the detected change in status is an updated telephone number.

5. A mobile communication device comprising the subsystem of either claim 1 or 4.

6. A system, including:
at least two of the mobile communication devices of claim 5; and
a synchronization server, the synchronization server being configured to communicate with the synchronization agent of each of the at least two mobile communication devices to receive the time zone status information from one of the mobile communication devices and to provide the time zone status information to the other one of the mobile communication devices.

7. The system of claim 5, wherein the information relating to the detected change in status is an updated telephone number.

8. The system of claim 6, wherein the synchronization server is further configured to update a PBX with said updated telephone number.

9. The system of any one of claims 5 to 7, wherein at least one of the mobile communication devices is configured to communicate with the synchronization server over a wireless network.

10. A method for providing status information, the method comprising:
detecting, by a device management agent executing on a mobile communication device associated with an organization, a change in status of the mobile communication device, the mobile communication device being associated with an organization and capable of communicating with a host system of the organization;
the device management agent obtaining information relating to the detected change in status;
the device management agent providing a synchronization agent executing on the mobile communication device with the information;
the synchronization agent communicating the information received from the device management agent to the host system;
the synchronization agent receiving, from the host system, time zone status information relating to another mobile communication device of interest associated with the organization;
the synchronization agent providing the received time zone status information to the device management agent;
the device management agent receiving the time zone status information;
the device management agent automatically updating a data store in the mobile communication device with the received time zone status information; and
upon initiation of a telephone call to the other mobile communication device, the mobile communication device providing a warning based on said time zone status information.

11. The method of claim 10, wherein communicating the information received from the device management agent to the host system and receiving the time zone status information relating to the other mobile communication device from the host system comprise communicating with a synchronization server of the host system.

12. The method of either claim 10 or 11, wherein the mobile communication device is configured to communicate with the host system over a wireless network.

13. The method of any one of claims 10 to 12, further comprising the mobile communication device registering an interest with the other mobile communication device with the host system.

14. The method of any one of claims 10 to 13, wherein the data store is an address book.

15. A computer-readable medium having instructions stored thereon which, when executed by a mobile communication device, causes the device to implement the method of any one of claims 10 to 14.

## Patentansprüche

1. Ein Teilsystem für eine mobile Kommunikationsvorrichtung (100), wobei die mobile Kommunikationsvorrichtung mit einer Organisation assoziiert ist und mit einem Hostsystem (30) der Organisation kommunizieren kann, wobei das Teilsystem einen Vorrichtungsverwaltungsagent (212) und einen Synchronisierungsagent (214) betriebsfähig auf der mobilen Kommunikationsvorrichtung aufweist, **dadurch gekennzeichnet, dass**:
der Vorrichtungsverwaltungsagent (212) betriebsfähig ist zum:
Erfassen einer Änderung eines Status der mobilen Kommunikationsvorrichtung (100);
Erlangen von Information in Bezug auf die erfasste Statusänderung;
Versehen des Synchronisierungsagents (214) mit der Information;
Empfangen, von dem Synchronisierungsagent, einer Zeitzone-Statusinformation in Bezug auf eine andere mobile Kommunikationsvorrichtung von Interesse, die ebenfalls mit der Organisation assoziiert ist; und
automatischen Aktualisieren eines Datenspeichers in der mobilen Kommunikationsvorrichtung (100) mit der empfangenen Zeitzone-Statusinformation, und
der Synchronisierungsagent (214) betriebsfähig ist zum:
Kommunizieren der Information, die von dem
Vorrichtungsverwaltungsagent (212) empfangen wird, an das Hostsystem (30);
Empfangen, von dem Hostsystem, der Zeitzone-Statusinformation in Bezug auf die andere mobile Kommunikationsvorrichtung; und
Vorsehen der empfangenen Zeitzone-Statusinformation an den Vorrichtungsverwaltungsagent (212),
wobei die mobile Kommunikationsvorrichtung (100) konfiguriert ist, bei Initiierung eines Telefonanrufs an die andere mobile Kommunikationsvorrichtung, zum Vorsehen einer Warnung basierend auf der Zeitzone-Statusinformation.

2. Das Teilsystem gemäß Anspruch 1, das weiter **dadurch gekennzeichnet ist, dass** der Vorrichtungsverwaltungsagent und der Synchronisierungsagent auf der mobilen Kommunikationsvorrichtung zusammenarbeiten zum Erlangen und Kommunizieren an das Hostsystem einer oder mehrerer Interessen an Statusinformation für andere mobile Kommunikationsvorrichtungen, die mit der Organisation assoziiert sind.

3. Das Teilsystem gemäß Anspruch 1, wobei der Datenspeicher ein Adressbuch ist.

4. Das Teilsystem gemäß Anspruch 1, wobei die Information in Bezug auf die erfasste Statusänderung eine aktualisierte Telefonnummer ist.

5. Eine mobile Kommunikationsvorrichtung, die das Teilsystem gemäß Anspruch 1 oder 4 aufweist.

6. Ein System, das umfasst:
zumindest zwei der mobilen Kommunikationsvorrichtungen gemäß Anspruch 5; und
einen Synchronisierungsserver, wobei der Synchronisierungsserver konfiguriert ist zum Kommunizieren mit dem Synchronisierungsagent von jeder der zumindest zwei mobilen Kommunikationsvorrichtungen, um die Zeitzone-Statusinformation von einer der mobilen
Kommunikationsvorrichtungen zu empfangen und die Zeitzone-Statusinformation an die andere der mobilen Kommunikationsvorrichtungen zu liefern.

7. Das System gemäß Anspruch 5, wobei die Information in Bezug auf die erfasste Statusänderung eine aktualisierte Telefonnummer ist.

8. Das System gemäß Anspruch 6, wobei der Synchronisierungsserver weiter konfiguriert ist zum Aktualisieren einer PBX mit der aktualisierten Telefonnummer.

9. Das System gemäß einem der Ansprüche 5 bis 7, wobei zumindest eine der mobilen Kommunikationsvorrichtungen konfiguriert ist zum Kommunizieren mit dem Synchronisierungsserver über ein drahtloses Netzwerk.

10. Ein Verfahren zum Vorsehen von Statusinformation, wobei das Verfahren aufweist:
Erfassen, durch einen Vorrichtungsverwaltungsagent, der auf einer mobilen Kommunikationsvorrichtung ausgeführt wird, die mit einer Organisation assoziiert ist, einer Änderung eines Status der mobilen Kommunikationsvorrichtung, wobei die mobile Kommunikationsvorrichtung mit einer Organisation assoziiert ist und mit einem Hostsystem der Organisation kommunizieren kann;
der Vorrichtungsverwaltungsagent erlangt Information in Bezug auf die erfasste Statusänderung;
der Vorrichtungsverwaltungsagent versieht einen Synchronisierungsagent,
der auf der mobilen Kommunikationsvorrichtung ausgeführt wird, mit der Information;
der Synchronisierungsagent kommuniziert die Information, die von dem Vorrichtungsverwaltungsagent empfangen wird, an das Hostsystem;
der Synchronisierungsagent empfängt von dem Hostsystem eine Zeitzone-Statusinformation in Bezug auf eine andere mobile Kommunikationsvorrichtung von Interesse, die mit der Organisation assoziiert ist;
der Synchronisierungsagent liefert die empfangene Zeitzone-Statusinformation an den Vorrichtungsverwaltungsagent;
der Vorrichtungsverwaltungsagent empfängt die Zeitzone-Statusinformation;
der Vorrichtungsverwaltungsagent aktualisiert automatisch einen Datenspeicher in der mobilen Kommunikationsvorrichtung mit der empfangenen Zeitzone-Statusinformation; und
bei Initiierung eines Telefonanrufs an die andere mobile Kommunikationsvorrichtung sieht die mobile Kommunikationsvorrichtung eine Warnung basierend auf der Zeitzone-Statusinformation vor.

11. Das Verfahren gemäß Anspruch 10, wobei das Kommunizieren der Information, die von dem Vorrichtungsverwaltungsagent empfangen wird, an das Hostsystem und Empfangen der Zeitzone-Statusinformation in Bezug auf die andere mobile Kommunikationsvorrichtung von dem Hostsystem ein Kommunizieren mit einem Synchronisierungsserver des Hostsystems aufweist.

12. Das Verfahren gemäß Anspruch 10 oder 11, wobei die mobile Kommunikationsvorrichtung konfiguriert ist zum Kommunizieren mit dem Hostsystem über ein drahtloses Netzwerk.

13. Das Verfahren gemäß einem der Ansprüche 10 bis 12, das weiter aufweist ein Registrieren, durch die mobile Kommunikationsvorrichtung, eines Interesses mit der anderen mobilen Kommunikationsvorrichtung mit dem Hostsystem.

14. Das Verfahren gemäß einem der Ansprüche 10 bis 13, wobei der Datenspeicher ein Adressbuch ist.

15. Ein computerlesbares Medium mit darauf gespeicherten Anweisungen, die bei Ausführung durch eine mobile Kommunikationsvorrichtung die Vorrichtung veranlassen, das Verfahren gemäß einem der Ansprüche 10 bis 14 zu implementieren.

## Revendications

1. Sous-système pour un dispositif de communication mobile (100), ledit dispositif de communication mobile étant associé à une organisation et capable de communiquer avec un système hôte (30) de l'organisation, le sous-système comprenant un agent (212) de gestion de dispositif et un agent de synchronisation (214) fonctionnant sur le dispositif de communication mobile, **caractérisé en ce que** :
l'agent (212) de gestion de dispositif fonctionne pour :
détecter un changement d'état du dispositif de communication mobile (100) ;
obtenir des informations relatives au changement d'état détecté ;
fournir à l'agent de synchronisation (214) des informations ;
recevoir, de l'agent de synchronisation, des informations d'état de fuseau horaire relatives à un autre dispositif de communication mobile d'intérêt également associé à l'organisation ; et
mettre à jour automatiquement une mémoire de données dans le dispositif de communication mobile (100) avec les informations d'état de fuseau horaire reçues, et
l'agent de synchronisation (214) fonctionne pour :
communiquer les informations reçues de l'agent (212) de gestion de dispositif au système hôte (30) ;
recevoir, du système hôte, les informations d'état de fuseau horaire relatives à l'autre dispositif de communication mobile ; et
fournir les informations d'état de fuseau horaire reçues à l'agent (212) de gestion de dispositif,
dans lequel le dispositif de communication mobile (100) est configuré pour fournir, lors du lancement d'un appel téléphonique à l'autre dispositif de communication mobile, un avertissement sur la base desdites informations d'état de fuseau horaire.

2. Sous-système de la revendication 1 **caractérisé en outre en ce que** l'agent de gestion de dispositif et l'agent de synchronisation fonctionnent sur le dispositif de communication mobile pour obtenir et communiquer au système hôte un ou plusieurs intérêts dans les informations d'état pour d'autres dispositifs de communication mobile associés à l'organisation.

3. Sous-système de la revendication 1, dans lequel la mémoire de données est un répertoire d'adresses.

4. Sous-système de la revendication 1, dans lequel les informations relatives au changement d'état détecté sont un numéro de téléphone mis à jour.

5. Dispositif de communication mobile comprenant le sous-système de la revendication 1 ou 4.

6. Système, comportant :
au moins deux des dispositifs de communication mobile de la revendication 5 ; et
un serveur de synchronisation, le serveur de synchronisation étant configuré pour communiquer avec l'agent de synchronisation de chacun des au moins deux dispositifs de communication mobile pour recevoir les informations d'état de fuseau horaire de l'un des dispositifs de communication mobile et pour fournir les informations d'état de fuseau horaire à l'autre des dispositifs de communication mobile.

7. Système de la revendication 5, dans lequel les informations relatives au changement d'état détecté sont un numéro de téléphone mis à jour.

8. Système de la revendication 6, dans lequel le serveur de synchronisation est en outre configuré pour mettre à jour une PBX avec ledit numéro de téléphone mis à jour.

9. Système de l'une quelconque des revendications 5 à 7, dans lequel au moins l'un des dispositifs de communication mobile est configuré pour communiquer avec le serveur de synchronisation sur un réseau sans fil.

10. Procédé pour fournir des informations d'état, le procédé comprenant le fait de :
détecter, par un agent de gestion de dispositif s'exécutant sur un dispositif de communication mobile associé à une organisation, un changement d'état du dispositif de communication mobile, le dispositif de communication mobile étant associé à une organisation et capable de communiquer avec un système hôte de l'organisation ;
l'agent de gestion de dispositif obtenant des informations relatives au changement d'état détecté;
l'agent de gestion de dispositif fournissant un agent de synchronisation s'exécutant sur le dispositif de communication mobile avec les informations ;
l'agent de synchronisation communiquant les informations reçues de l'agent de gestion de dispositif au système hôte ;
l'agent de synchronisation recevant, du système hôte, des informations d'état de fuseau horaire relatives à un autre dispositif de communication mobile d'intérêt associé à l'organisation ;
l'agent de synchronisation fournissant les informations d'état de fuseau horaire reçues à l'agent de gestion de dispositif ;
l'agent de gestion de dispositif recevant les informations d'état de fuseau horaire ;
l'agent de gestion de dispositif mettant à jour automatiquement une mémoire de données dans le dispositif de communication mobile avec les informations d'état de fuseau horaire reçues ; et
lors du lancement d'un appel téléphonique à l'autre dispositif de communication mobile, le dispositif de communication mobile fournissant un avertissement sur la base desdites informations d'état de fuseau horaire.

11. Procédé de la revendication 10, dans lequel la communication des informations reçues de l'agent de gestion de dispositif au système hôte et recevant les informations d'état de fuseau horaire relatives à l'autre dispositif de communication mobile à partir du système hôte comprennent la communication avec un serveur de synchronisation du système hôte.

12. Procédé de la revendication 10 ou 11, dans lequel le dispositif de communication mobile est configuré pour communiquer avec le système hôte sur un réseau sans fil.

13. Procédé de l'une quelconque des revendications 10 à 12, comprenant en outre le dispositif de communication mobile enregistrant un intérêt avec l'autre dispositif de communication mobile avec le système hôte.

14. Procédé de l'une quelconque des revendications 10 à 13, dans lequel la mémoire de données est un répertoire d'adresses.

15. Support lisible par ordinateur sur lequel sont stockées des instructions qui, lorsqu'elles sont exécutées par un dispositif de communication mobile, amènent le dispositif à mettre en oeuvre le procédé de l'une quelconque des revendications 10 à 14.
